Europäisches Patentamt

European Patent Office

Office européen des brevets

(11) Publication number: **0 060 563**
**B1**

(12) **EUROPEAN PATENT SPECIFICATION**

(45) Date of publication of patent specification: **30.09.87**

(21) Application number: **82102151.6**

(22) Date of filing: **17.03.82**

(51) Int. Cl.⁴: **G 05 B 19/41**

(54) **Industrial articulated robot linear interpolation control device.**

(30) Priority: **18.03.81 JP 38872/81**

(43) Date of publication of application:
**22.09.82 Bulletin 82/38**

(45) Publication of the grant of the patent:
**30.09.87 Bulletin 87/40**

(84) Designated Contracting States:
**CH DE FR GB LI SE**

(56) References cited:
**FR-A-2 384 296**
**FR-A-2 460 000**
**US-A-3 727 191**

(73) Proprietor: **KABUSHIKI KAISHA YASKAWA DENKI SEISAKUSHO**
**2346, Oaza-Fujita Yahatanishi-Ku**
**Kitakyushu-Shi Fukuoka-Ken (JP)**

(72) Inventor: **Nio, Satoru**
**2346, Oaza-Fujita Yahatanishi-Ku**
**Kitakyushu-Shi Fukuoka-Ken (JP)**
Inventor: **Sato, Shinobu**
**2346, Oaza-Fujita Yahatanishi-Ku**
**Kitakyushu-Shi Fukuoka-Ken (JP)**
Inventor: **Nobayashi, Shigemi K.K. Yaskawa Denki Seisakusho**
**2346, Oaza-Fujita Yahatanishi-Ku**
**Kitakyshu-Shi Fukuoka-Ken (JP)**
Inventor: **Hamashima, Toyoji K.K. Yaskawa Denki Seiskusho**
**2346, Oaza-Fujita Yahatanishi-Ku**
**Kitakyushu-Shi Fukuoka-Ken (JP)**

(74) Representative: **Reichel, Wolfgang, Dipl.-Ing. et al**
**Reichel und Reichel Parkstrasse 13**
**D-6000 Frankfurt am Main 1 (DE)**

Courier Press, Leamington Spa, England.

# 0 060 563

**Description**

This invention relates to a linear interpolation control method and device for an industrial articulated robot including a wrist.

Articulated robots are compact and can be readily operated at high speed, when compared with other robots. However, it is difficult to perform the interpolation function accurately and economically.

In a cartesian coordinates robot, interpolation outputs in the orthogonal coordinate system (X, Y, Z) may be applied directly to drive axes X, Y and Z. On the other hand, an articulated robot needs intricate coordinate transformation between the articulation drive axes and the orthogonal coordinates in addition to the interpolation in the orthogonal coordinate system. In order to quickly and accurately perform interpolation calculations including the intricate coordinate transformation during the operation of the robot, it is necessary to use an expensive device such as a minicomputer. However, minicomputer-operated robots have not been practically used yet, because they are not economical as an industrial articulated robot.

An approximate calculation method has been proposed in order to simplify the arithmetic operations; however, it is not practical because of large interpolation errors.

In an articulated robot of a teaching playback type, a so called "one pulse interpolation" in which a complicated calculation is executed during each reference clock pulse period, and judgement which is exercised for determining, whether one pulse is delivered to the driving axis or not, is not always necessary in the execution of a linear interpolation between two taught points, because in a case where the distance between the two taught points for the tip of the tool (for instance, a welding gun) connected to the wrist is short, the tip of the tool can be driven in a linear manner with a sufficiently high accuracy, when incremental pulses are uniformly distributed (simultaneous start and simultaneous stop manner) among the articulation drive axes for a predetermined time.

Even in a case where the distance between the two taught points is long, an interpolation control of negligible interpolation error can be achieved by employing the following method: The distance between the two taught points is divided into segments of lengths defined by the tangential speed, period of the reference clock, and the distance between the two points. Then the increment pulses to be used for carrying out linear interpolation and wrist interpolation at a repetition rate equal to the number of segments are calculated, and the increment pulses thus calculated are uniformly distributed with respect to time by use of a BRM (Binary Rated Multiplier).

An object of this invention is to provide a control method and a device for executing the control method for an articulated robot in which the segment number for the linear interpolation portion is switched depending on whether the speed of the wrist axis exceeds the maximum number of revolution per minute of the drive motor or not, so that in either of the cases the posture of the wrist is uniformly changed between the two points to be linearly interpolated, while the interpolation calculation being carried out with high accuracy by use of an inexpensive simple arithmetic unit and a BRM pulse distribution circuit including two-stage buffer means. Further no inter-block stopping trouble should occur at a turning point between linear operations; i.e., linear interpolation should be carried out by smoothly connecting straight lines.

According to the invention the foregoing object and other objects can be achieved by a method for controlling the motion of a wrist of an articulated robot between two taught points which have been memorized during a teaching mode, the end of a tool attached to the wrist being controlled by linear interpolation between the two points during the playback mode, the wrist having a plurality of drive axes, the distance between the two points being divided into segments, corresponding to the each segment the interpolation increments of the rotational angle of each articulation drive axis are determined, the method being characterized by the following steps:

(a) setting a reference speed corresponding to the maximum rotating speed of a drive electric motor of each wrist axis;

(b) setting a reference number of the segments which are calculated in accordance with a period of a reference clock pulse, tangential speed along the path being connected by the two points and the distance between the two points;

(c) comparing the reference speed with a computed wrist axis speed defined by the reference number, the period and the interpolation angle of the wrist;

(d) when the computed wrist axis speed is smaller than the reference speed, both interpolation of linear motion of the tool end and of rotational motion of the wrist are effected by repetitions of the same number as the reference number;

(e) but when the computed wrist axis speed exceeds the reference speed, both interpolation of linear motion of the tool end and of rotational motion of the wrist are effected by repetitions of a different number from the reference number to maintain the rotating speed of the drive electric motor equal to or less than the reference speed.

In another aspect of the invention, there is provided a control device for controlling an articulated robot of teaching playback type according to linear interpolation between two successive taught points, the device comprising:

(a) a main central processing unit which, upon reception of a command request signal from an

2

arithmetic unit, delivers teach data (including at least coordinate data for the start and end points of the linear interpolation and tangential speed data) and a macrocommand signal that constitutes an interpolation start signal, successively, to the arithmetic unit; .

(b) the arithmetic unit which, in accordance with microprograms stored therein, determines the number of segments obtained by dividing the distance between the starting point and the end point into a plurality of segments, and thereby produces in every reference clock a number of increment pulses for each articulation axis based on the amount of a segment corresponding to the number of the segments;

(c) a two-stage buffer pulse distributing unit which includes a plurality of circuits respectively provided for the actuators of the articulation axes, each circuit comprising two series-connected buffers and a binary rated multiplier which produces the number of increment pulses in every reference clock so that the increment pulses are distributed evenly with respect to time; and

(d) position servo mechanism which receive the increment pulses delivered from said pulse distributing unit and operate the actuators for controlling the rotational movements of the articulation axes, characterized in that said number of segments is determined in a manner such that:

(1) in case where the rotating speed of any one of the wrist axes corresponding to the motion of the wrist to be interpolated is smaller than the maximum rotating speed of a drive electric motor of the wrist axis, the number of the segments is determined from the reference clock, tangential speed and the distance between the two points, but

(2) in case where the rotating speed of any one of the wrist axes corresponding to the motion of the wrist to be interpolated exceeds the maximum rotating speed of the drive electric motor, the number of the segments is determined so that the wrist axis speed is reduced to a value equal to or less than the maximum rotating speed of the drive electric motor.

This control device for an industrial articulated robot is a teaching playback system, in which, when linear interpolation between two points specified is carried out, a distance between the two points is divided into segments of a length defined by a tangential speed, a reference clock period and the distance between the two points, and incremental pulse numbers of articulation drive axes, which correspond to each of the segments, are subjected to interpolation calculation, so that the incremental pulse members are pulse-distributed uniformly, with respect to time.

When compared with the conventional linear interpolation apparatus employing an expensive device, such as a microcomputer, and executing the "one pulse interpolation" which requires an interpolation calculation each time when a reference clock is received, this invention is advantageous in that it can be realized by use of hardwares, such as a BRM in addition to an inexpensive arithmetic unit, because, in this invention, the interpolation is carried out for each segment, and no trouble is caused, even if it takes a relatively long period of time to achieve the interpolation calculation including the coordinate transformation.

French Patent No. 2 460 000 discloses a technique wherein a section extending between two points on a curve is divided into a plurality of segments, and interpolation is carried out in terms of these segments. More specifically, according to this prior art, each independent variable expressed by a parameter γ is divided into a plurality of segments, each corresponding to an increment value of the parameter, and interpolation is executed between the two points on the curve expressed by a function. Ordinarily, the lengths of the segments are different from each other. However, when the function expresses a straight line, the lengths of the segments are made equal as in the case of the present invention.

Although in the present invention, the incremental pulses to be applied to be robot axes are uniformly distributed with respect to time by use of the BRM for moving the tool tip of the robot along the aforementioned straight line, such a technique is not disclosed in the French Patent.

Furthermore, according to the present invention, the interpolation is also executed for the wrist angle (posture) in parallel with the interpolation for the linear portion of the robot. That is, the interpolation speed of the linear portion is made equal to that of the wrist angle (or posture). French Patent No. 2 460 000 does not disclose such a feature.

In the linear interpolation of the present invention, not only the linear movement of the tip of the gun connected to the wrist, but also the posture of the gun is required to be controlled simultaneously. The posture of the gun is determined according to the nature of the operation of the robot and the work to be processed. For instance in the case of a welding robot, the posture of the gun, which is defined by a torch angle, advance angle, etc. must be maintained constant so that the posture causes no trouble in the welding operation.

In the case where a linear interpolation distance is short and it is necessary to abruptly change the posture of the wrist (or the gun), for instance, at a corner, if the linear interpolation and the correction of the wrist posture are carried out with reference to the segment number of the linear interpolation operation (determined by the tangent speed, distance between the two points, and the reference clock), the amount of the movement around the wrist axis during every reference clock pulse becomes excessively large, and sometimes it may exceed the maximum number of revolutions per minute of a wrist drive motor. This trouble is significant in the extreme case where the position of the tip of the gun is maintained substantially unchanged, i.e., the linear interpolation distance is substantially zero, and only the wrist is moved.

However, this problem can be solved by employing the following method: In the case where the movement of the wrist axes does not exceed the maximum number of revolutions per minute of the drive motor, linear interpolation is effected based on the segment number of the linear interpolation portion, while the posture of the wrist is controlled so that it is uniformly changed between the two points to be linearly interpolated. In the case where the amount of the movement of the wrist axis exceeds the maximum number of revolutions per minute of the motor, linear interpolation is carried out with the segment number of the linear interpolation portion changed so as to satisfy the maximum number limitation of the wrist axis driving motor.

As for the problem of stopping movement at the junction points between successive linear interpolations, such a difficulty can be overcome by an advanced read calculation and a two-stage buffer, pulse out-putting method.

A preferred embodiment of this invention will be described with reference to the accompanying drawings, in which

Fig. 1 is a diagram showing a model of a multi-articulated robot;

Fig. 2 is an external view showing the wrist of the robot and a gun connected thereto;

Fig. 3 is an explanatory diagram for a description of a linear interpolation which is effected between specified start and end point while performing linear acceleration or deceleration; and

Fig. 4 is a block diagram showing the arrangement of one embodiment of this invention.

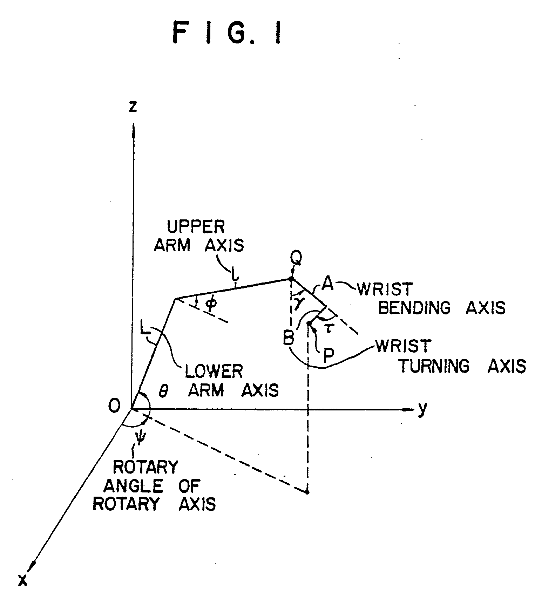

Fig. 1 shows a model of a multi-articulated robot. The rotary axis, the lower arm axis L and the upper arm axis I are controlled by rotation angles $\psi$, $\theta$ and $\pi$, respectively; and the wrist bending axis and the turning axis are controlled by rotation angles $\gamma$ and $\tau$, respectively.

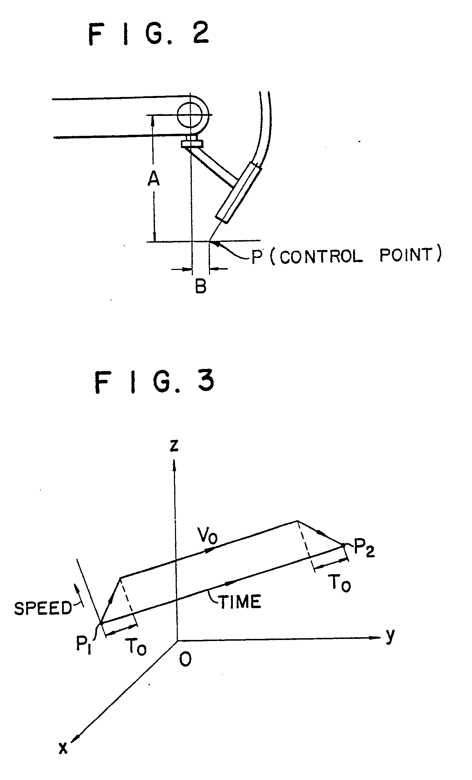

Fig. 2 shows the wrist of ohe robot and a gun secured thereto.

In Fig. 1, the point P which is spaced a distance A from the center Q of rotation of the wrist bending axis and a distance B from the center of rotation of the turning axis is a control point which should be subjected to linear interpolation.

The position of the point P can be expressed in the orthogonal coordinate system by using the articulation drive angles $\psi$, $\theta$, $\varphi$, $\gamma$ and $\tau$, according to the following expressions:

$$X=(L\cos\theta+I\cos\varphi+A\sin\gamma+B\cos\tau \cdot \cos\gamma) \cdot \cos\varphi-B\sin\tau \cdot \sin\psi$$

$$Y=(L\cos\theta+I\cos\varphi+A\sin\gamma+B\cos\tau \cdot \cos\gamma) \cdot \sin\psi+B\sin\tau \cdot \cos\psi \qquad (1)$$

$$Z=L\sin\theta+I\sin\varphi-A\cos\gamma+B\cos\tau \cdot \sin$$

In the linear interpolation during the playback mode between the start and end points which are taught by an articulation drive system, first the start point $P_1$ ($\psi_1$, $\theta_1$, $\varphi_1$, $\gamma_1$, $\tau_1$) and the end point $P_2$ ($\psi_2$, $\theta_2$, $\varphi_2$, $\gamma_2$, $\tau_2$) are expressed as ($x_1$, $y_1$, $z_1$) and $x_2$, $y_2$, $z_2$) in the orthogonal coordinate system, respectively.

The distance D between the two points is:

$$D=\sqrt{\delta x^2+\delta y^2+\delta z^2} \qquad (2)$$

where

$$\delta x=x_2-x_1,$$

$$\delta y=y_2-y_1,$$

$$\delta z=z_2-z_1,$$

$$\delta\gamma=\gamma_2-\gamma_1, \text{ and}$$

$$\delta\tau=\tau_2-\tau_1.$$

The number of segment ($N_1$) (repetition number of interpolation) is:

$$N_1=D/(C_0V_0) \qquad (3)$$

where $C_0$ is the reference clock period, and $V_0$ is the tangential speed.

Therefore, the amount of segment (length or angle) outputted every reference clock pulse is represented by the following:

$$\Delta x=\delta x/N_1, \ \Delta y=\delta y/N_1, \ \Delta z=\delta z/N_1, \ \Delta\gamma=\delta\gamma/N_1, \text{ and } \Delta\tau=\delta\tau/N_1 \qquad (4)$$

This value is the amount of movement for every reference clock pulse, i.e., the speed.

As was described before, when the position of the wrist axes changes abruptly, for instance, at a corner, sometimes the speed of the wrist axes may exceed the maximum number of revolutions per minute of the drive motor. In order to prevent this, the following values $N_2$ and $N_3$ are calculated.

4

$$N_2 = \delta\gamma/\gamma_{max}, \text{ and } N_3 = \delta\tau/\tau_{max} \tag{5}$$

where $\gamma_{max}$ and $\tau_{max}$ are the amounts of movement (angle) per reference clock period when the number of revolutions per minute of the wrist drive motor is at maximum. The magnitudes of $N_1$, $N_2$ and $N_3$ are determined, and the maximum of the magnitudes thus determined is employed as the number of segment (repetition number of interpolation). When $N_1 > N_2$ and $N_1 > N_3$, the amount of segment (length or angle) is as indicated by the expression (4); and when $N_2 > N_1$ and $N_2 > N_3$,

$$\Delta x = \delta x/N_2, \ \Delta y = \delta y/N_2, \ \Delta z = \delta z/N_2, \ \Delta\gamma = \delta\gamma/N_2, \text{ and } \Delta\tau = \delta\tau/N_2 \tag{6}$$

When $N_3 > N_1$ and $N_3 > N_2$, $N_3$ is substituted for $N_2$ in the expression (6).

The values $\Delta x$, $\Delta y$ and $\Delta z$ which are calculated according to the expressions (4) or (6) are accumulated as present values. Reverse transformation is effected by using the present values x, y, z, $\gamma$ and $\tau$, to obtain $\psi$, $\theta$ and $\phi$. The differences $\Delta\psi$, $\Delta\theta$, $\Delta\phi$, $\Delta\gamma$, $\Delta\tau$ between these values ($\psi$, $\theta$, $\phi$, $\gamma$, $\tau$) and those at the time of the previous reference clock pulse are outputted, as command pulses, to the axis drive position servo-mechanisms through the BRM, to subject the control point P to linear interpolation.

At the last outputting of the difference signals, correction of $\phi_2 - \phi = \Delta\phi$, $\theta_2 - \theta = \Delta\theta$, $\phi_2 - \phi = \Delta\phi$, $\gamma_2 - \gamma = \Delta\gamma$ and $\tau_2 - \tau = \Delta\tau$ is carried out to correct errors such as computational errors, so that return to the positioning point taught is effected.

Fig. 3 is an explanatory diagram for a description of the case where the linear interpolation between the start point $P_1$ and the end point $P_2$ is carried out while linear acceleration and deceleration are effected.

The number of segment (repetition number of interpolation) $N_0$ in the acceleration and deceleration time $T_0$ is:

$$N_0 = T_0/C_0 \tag{7}$$

An advance distance L(N) in the time $T_0$ is:

$$L(N) = \frac{V_0 C_0^2 N^2}{2T_0} \tag{8}$$

When the distance D between the start and end points is larger than $2L(N_0)$ or $D > 2L(N_0)$, there is a constant or steady speed part or parts. When $D \leqq 2L(N_0)$, there are only acceleration and deceleration portions.

The number ($N_4$) of segment (repetition number of interpolation) for the acceleration and deceleration portion is:

$$N_4 = N_0 \text{ when } D > 2L(N_0)$$

When $D \leqq 2L(N_0)$, D/2 is inserted in the left side of the expression (8) to obtain N, which is $N_4$.

The number ($N_5$) of segment for the constant speed portion is:

$$\text{When } D \leqq 2L(N_0), \ N_5 = 0$$

$$\text{When } D > 2L(N_0),$$

$$N_5 = \frac{D - 2L(N_0)}{C_0 V_0} \tag{9}$$

Accordingly, the total number ($N_1$) of segment is:

$$N_1 = 2N_4 + N_5 \tag{10}$$

$N_1$ thus obtained is compared with $N_2$ or $N_3$.

In the case of $N_1 \geqq N_2$ and $N_1 \geqq N_3$, $N_1$ is employed as the total number of segment (repetition number of interpolation), as is.

In the case of $N_1 < N_2$ or $N_1 < N_3$, the specified speed is not in agreement with the motion of the wrist. Therefore, it is necessary to amend the speed $V_0$ to be consistent with the motion of the wrist.

In the case of $D \leqq 2L(N_0)$, with $N_4 = N_2/2$, the amended speed $V_0'$ is obtained from the expression (8).

In the case of $D > 2L(N_0)$, with $N_1 = N_2$ and $N_4 = N_0$, the number $N_5$ of segment for the constant speed portion is obtained from the expression (10) and is then inserted into the expression (9), to obtain the amended speed $V_0'$.

5

With $V_0 = V_0'$, the following calculations are carried out:

At the K-th reference clock, the axes components of the advanced distance for the acceleration portion are:

$$\begin{bmatrix} dx(k) \\ dy(k) \\ dz(k) \end{bmatrix} = \frac{L(k)}{D} \begin{bmatrix} \delta x \\ \delta y \\ \delta z \end{bmatrix} \quad (11)$$

and

the axes components of the advanced distance for the constant speed portion is:

$$\begin{bmatrix} U_x \\ U_y \\ U_z \end{bmatrix} = (1 - \frac{2L(N_0)}{D}) \begin{bmatrix} \delta x \\ \delta y \\ \delta z \end{bmatrix} \quad (12)$$

Each advanced distance can be obtained by dividing the expression (12) by $N_5$.

At the time of acceleration, values obtained by adding the expression (11) to the coordinates of the start point are employed as the present values. At the time of constant speed, values obtained by adding the preceding values to values obtained by dividing the expression (12) by $N_5$ are employed as the present values. At the time of deceleration, values obtained by subtracting the expression (11) (in which $K = N_4 - K$ is inserted) from the coordinates of the end point are employed as the present values.

The values of two axes of the wrist are uniformly distributed irrespective of acceleration and deceleration:

$$\Delta \gamma = \delta \gamma / N_1 \text{ and } \Delta \tau = \delta \tau / N_1 \quad (13)$$

Every reference clock pulse $\psi$, $\theta$ and $\phi$ are obtained from the present values of x, y, z and $\gamma$ and $\tau$ in a manner similar to the case where no acceleration and deceleration is effected, and the difference $\Delta\psi$, $\Delta\theta$, $\Delta\phi$, $\Delta\gamma$ and $\Delta\tau$ between the present values at the present reference clock pulse and those at the previous reference clock pulse are applied, as command pulses, to the axes servos through the aforementioned BRM.

The amendment for the last time is carried out in a manner similar to the case where no acceleration and deceleration is effected.

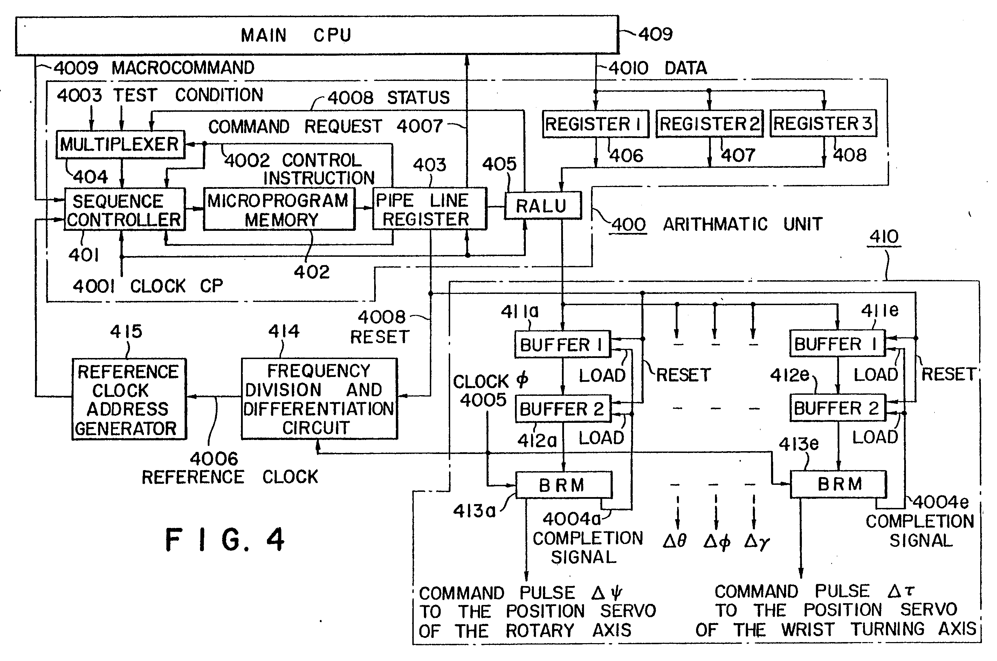

Fig. 4 is a block diagram showing the connection of a linear interpolation control unit composed of an arithmetic unit and a BRM with two stages of buffers, and main CPU (central processing unit) for controlling them.

In the case where, in response to a command request 4007 from the arithmetic unit, linear interpolation is carried out on the entire robot operation sequence, the main CPU 409 reads out of a memory (not shown) data of each axis pulse number from the original position of the articulation drive axes, tangential speed and presence or absence of acceleration or deceleration at the start point and the end point of linear interpolation, to set the data in a register "1" (406), a register "2" (407) and a register "3" (408), and outputs a linear interpolation start macrocommand 4009.

The arithmetic unit 400 is composed of a sequence controller 401, a microprogram memory 402, a pipe line register 403, a multiplexer 404, a RALU (register and arithmetic logical unit) 405, the register "1" (406), the register "2" (407) and the register "3" (408).

The sequence controller 401 is an address controller for controlling the execution sequence of microinstructions stored in the microprogram memory 402. It carries out various addressing and stack controls according to a control instructions 4002 from the pipe line register 403.

More specifically, the sequence controller 401 deals with the incrementing of an address being executed, selection of an address specified by a macrocommand 4009, selection of an address specified by a reference clock address generator 415, selection of a jump address given by the pipe line register 403 in the case of a conditional jump according to a test condition 4003 including a status 4008 of the RALU, selection of a jump address given by the pipe line register 403 in the case of non-conditional jump, and stack control at the time of a microsubroutine call.

The macrocommand 4009, and outputs from the reference clock address generator 415 and the pipe line register 403 are employed as input data for addressing.

The sequence controller 401 selects one of these data according to a microprogram, i.e., control instructions 4002 from the pipe line register 403.

In the case of the linear interpolation, only a linear interpolation start command is provided as the macrocommand 4009. The command is provided to indicate the entry address (hereinafter represented merely by a symbol N#, when applicable) of a linear interpolation service microprogram used by the hardware.

The output of the reference clock address generator 415 is provided to indicate the entry address (hereinafter represented merely by a symbol M#, when applicable) of a service microprogram for obtaining the numbers of the increment pulses $\Delta\psi$, $\Delta\theta$, $\Delta\varphi$, $\Delta\gamma$ and $\Delta\tau$ of each articulation from the aforementioned data $\Delta x$, $\Delta y$, $\Delta z$, $\Delta\gamma$ and $\Delta\tau$.

Thus, M# is included in a series of microprograms for obtaining the numbers of the increment pulses $\Delta\psi$, $\Delta\theta$, $\Delta\varphi$, $\Delta\gamma$ and $\Delta\tau$ beginning with N#.

At the start of linear interpolation, after obtaining $\Delta\psi$, $\Delta\theta$, $\Delta\varphi$, $\Delta\gamma$ and $\Delta\tau$ beginning with N#, the arithmetic unit 400 waits for a reference clock pulse 4006 in a wait routine.

Thereafter, whenever the reference clock signal 4006 is produced, the arithmetic unit 400 starts an arithmetic operation for obtaining $\Delta\psi$, $\Delta\theta$, $\Delta\varphi$, $\Delta\gamma$ and $\Delta\tau$ beginning with M#, and waits for the next reference clock 4006. The unit 400 repeatedly carries out this operation until a block end occurs.

In the other cases, addressing is effected by a jump address, subroutine call address and current address increment provided by the pipe line register 403.

The microprogram memory 402 is the center of the arithmetic unit 400. All of the arithmetic operations are carried out according to instructions from the microprogram memory 402.

The pipe line register 403 is a buffer register for the microprogram memory 402. The register 403 outputs micro instructions to be executed at that time to the RALU 405, outputs control instructions 4002 for determining the next microaddress to the sequence controller 401 and the multiplexer 404, and outputs the jump address, subroutine call address and current address increment to the sequence controller 401. When the block end occurs upon completion of the linear interpolation, the pipe line register 403 applies a command request 4007 to the main CPU.

The pipe line register 403 forms two signal paths. The operations in the signal paths are carried out in a parallel mode, to reduce micro cycle time and to thus increase the arithmetic operation speed.

One of the two signal paths is a control path consisting of the pipe line register 403, the sequence controller 401 and the microprogram memory 402 which are connected in the stated order, and the other is an arithmetic path consisting of the pipe line register 403 and the RALU. The pipe line register 403 is provided in order to operate the two paths in a parallel mode during the same clock cycle.

At the rise of a clock signal CP4001, the next instructions of the microprogram, which is prepared in the control path, has already been applied to the pipe line register 403. Therefore, high speed operation in which the memory fetch time is substantially zero can be carried out.

The multiplexer 404 applies the RALU status 4008 and test conditions 4003 such as external conditions to the sequence controller 401 in response to the control instructions from the pipe line register 403, thereby to effect the conditional jump.

The RALU 405 is made up of a logic and arithmetic calculation unit and programmable registers, to carry out calculation instructions specified by the microprogram. The calculation results, or the incremental pulse numbers of the articulation drive axes for every reference clock pulse are stored in the predetermined registers in the RALU 405.

The register "1" (406) and the register "2" (407) store the numbers of pulses from the original positions of the articulation drive axes at the start and end points of a linear interpolation. The register "3" (408) stores tangential speed of linear interpolation, acceleration and deceleration time, and presence or absence of acceleration or deceleration.

Buffers "1" (411a through 411e) are registers which store increment pulse numbers which are to be outputted with the next reference clock for each articulation drive axis, and buffers "2" (412a through 412e) are registers which store increment pulse numbers which are being outputted at the present time.

BRMSs 413a through 413e uniformly distribute, as pulses synchronous with a clock signal $\phi$ 4005, the pulse numbers stored in the buffers "2" within the reference clock period, and output completion signals 4004a—4004e for buffer transferring every reference clock 4006.

The buffers "1", the buffers "2" and the BRMs form a two-stage buffer pulse distributing unit.

A frequency division and differentiation circuit 414 forms the reference signal clock 4006, from the clock signal $\phi$ 4005, which was frequency-divided by the number of bits of the BRMs 413a through 413e, to synchronize the BRM output completion signals 4004a—4004e with the reference clock signal 4006.

Further in Fig. 4, reference numeral 415 designates an address generator to generate M# from the reference clock signal 4006.

The linear interpolation operation of the circuitry shown in Fig. 4 will be described.

The arithmetic unit 400 first executes the wait routine, to cause the pipe line register 403 to apply the command request 4007 to the main CPU 409. The sequence controller 401 carries out address control to perform the wait routine while receiving the control instruction 4002 for N# selection from the pipe line register 403, upon reception of the macrocommand 4009.

As the wait routine includes an instruction 4008A for resetting the frequency division and differentiation circuit 414, no reference clock signal 4006 is produced thereby.

Before the linear interpolation is started, the main CPU 409 sets data 4010 of start point, end point, tangential speed, acceleration and deceleration time and presence or absence of acceleration or deceleration in the register "1" 406, the register "2" 407 and the register "3" 408.

When the main CPU 409 outputs the linear interpolation start macrocommand 4009, the linear interpolation microprogram begining with N# is executed.

As instructions for releasing the reset signal 4008A of the frequency division and differentiation circuit 414 has been stored in N#, the circuit 414 starts counting pulses of the clock signal $\phi$ (4005).

Thereafter, the sequence controller 401 operates to carry out the addressing necessary for arithmetic operation, until the generation of the output from the reference clock address generator 415.

The arithmetic unit 400 calculates $P_1$ $(x_1, y_1, z_1)$ and $P_2$ $(x_2, y_2, z_2)$ according to the expression (1) with the pulse numbers of each articulation drive axis at the start and end points, and obtains the distance D from the expression (2) and the values $N_2$ and $N_3$ from the expression (5). The arithmetic unit 400 further obtain the number $(N_1)$ of times of segment interpolation for every clock by inserting the tangential speed $V_0$ stored in the register "3" in the expression (3).

In the case where no acceleration or deceleration is effected, $N_1$, $N_2$ and $N_3$ are subjected to comparison, so that segments (amounts of increment) $\Delta x$, $\Delta y$, $\Delta z$, $\Delta y$ and $\Delta \tau$ per pulse of reference clock signal 4006 are obtained from the expression (4) or (6).

In the case where acceleration or deceleration is effected, the amounts of increments at the times of acceleration, steady speed and deceleration are obtained from the expressions (8) through (13).

Next, the microprogram advances to M#, the values $\psi$, $\theta$ and $\phi$ are obtained through the reverse conversion of the expression (1) by using the present values which are obtained by adding $\Delta x$, $\Delta y$, $\Delta z$, $\Delta y$ and $\Delta \tau$ to $x_1$, $y_1$, $z_1$, $y_1$ and $\tau_1$ of the start point.

The differences $\Delta \psi$, $\Delta \theta$, $\Delta \phi$, $\Delta y$ and $\Delta \tau$ between the values $\psi$, $\theta$, $\phi$, $\gamma$ and $\tau$ and the values $\psi_1$, $\theta_1$, $\phi_1$, $y_1$ and $\tau_1$ of the start point are set in the predetermined registers in the RALU 405, and a wait routine is performed. The wait routine, unlike a wait routine for waiting for N#, waits for the next pulse of reference clock signal 4006, i.e., M#, and the frequency division and differentiation circuit 414 is not reset.

The clock signal $\phi$ 4005 and the number of bits of the BRMs 413a through 413e are so set that the reference clock (4006) period is longer than the time interval which elapses until the above-described calculations are achieved. Therefore, even if the calculation time is sufficiently long, there is no trouble.

In the case where the arithmetic unit 400 performs the wait routine for waiting for M#, when the reference clock signal 4006 is produced, simultaneously the BRMs 413a through 413e output the output completion signals, so that $\Delta \psi$, $\Delta \theta$, $\Delta \phi$, $\Delta y$ and $\Delta \tau$ from the predetermined registers in the RALU 405 are loaded in the five buffers "1" (411a through 411e), respectively, and the contents of the buffers "1" (411a through 411e) are loaded in the buffers "2" (412a through 412e).

With the initial reference clock signal 4006, as the buffers "1" 411a through 411e have been maintained cleared, zero (0) is loaded in the buffers "2" 412a through 412e and pulse outputting is not carried out by the BRMs 413a through 413e.

The reference clock address generator 415 is operated by the reference clock signal 4006, the microprogram is executed beginning with M#, so that $\psi$, $\theta$, $\phi$, $\gamma$ and $\tau$ are obtained through reverse conversion of the expression (1) by using the new present values which are obtained by adding the increments $\Delta x$, $\Delta y$, $\Delta z$, $\Delta y$ and $\Delta \tau$ of this time to the previous present values x, y, z, y and $\tau$, and the differences $\Delta \psi$, $\Delta \theta$, $\Delta \phi$, $\Delta y$ and $\Delta \tau$ are set in the predetermined registers in the RALU 405 similarly as in the above-described case, and the wait routine for waiting for the next M# is effected. The previous contents of the buffers "1" 411a through 411e are loaded in the buffers "2" 412a through 412e, and command pulse outputting to the axis position servos is carried out by the BRMs 413a through 413e.

The above-described operations are repeatedly carried out until the control point P reaches the end point and the block end occurs.

While the two-stage buffers and BRMs perform pulse outputting, the next data are loaded in the buffers "1" 411a through 411e at all times. Therefore, even when a connecting point between linear interpolations is reached, the robot is moved smoothly, without stopping at connecting point.

The robot stops only once at the beginning of a number of linear interpolations. This is the case where the robot stops in any event, and therefore, the stop will not affect the smooth motion of the robot at all.

As is apparent from the above description, according to the invention, linear interpolation is carried out with high accuracy while the wrist is finely controlled by the linear interpolation apparatus which is composed of the arithmetic unit and the BRMs with the buffers. The apparatus is low in manufacturing cost and simple in construction. Therefore, teaching can be readily achieved when the articulated robot is applied to an object which has a number of linear parts.

In other words, in the invention, in the case where the articulated robot is operated between two points, which are specified in advance, by linear interpolation control, interpolation is effected by calculating the amounts of increment in position for every reference clock pulse which amounts are defined by the distance between two points, the specified tangential speed and the reference clock. Therefore,

(1) When the tangential speed is in a low range, the interpolation precision is guaranteed to be less than one position detection pulse of each articulation drive axis. In practice, an interpolation error can be neglected even when the tangential speed is in a high range.

(2) When a specified point to be subjected to linear interpolation is switched, no inter-block stop is caused. Therefore, the specified points can be connected while linear interpolation is effected between them.

(3) As the linear acceleration and deceleration control function is provided, when the robot is stopped after the high speed linear interpolation, it is scarcely vibrated.

(4) The arithmetic control is effected so that the postures of the wrist bending axis and the turning axis of the robot at the start and the end point are changed uniformly with respect to distance.

(5) In the case where the linear interpolation distance is relatively short as in the case when the direction of a straight line is changed and it is required to abruptly change the posture of the wrist, linear interpolation is carried out with the amounts of increment in posture of the wrist instead of the amounts of increment in position which are obtained every reference clock.

**Claims**

1. Method for controlling the motion of a wrist of an articulated robot between two taught points which have been memorized during a teaching mode, the end of a tool attached to said wrist being controlled by linear interpolation between said two points during the playback mode, said wrist having a plurality of drive axes, the distance between said two points being divided into segments, corresponding to said each segment the interpolation increments of the rotational angle of each articulation drive axis are determined, the method being characterized by the following steps:

(a) setting a reference speed corresponding to the maximum rotating speed of a drive electric motor of each wrist axis;

(b) setting a reference number of said segments which are calculated in accordance with a period of a reference clock pulse, a tangential speed along the path being connected by said two points and the distance between said two points;

(c) comparing the reference speed with a computed wrist axis speed defined by said reference number, said period and the interpolation angle of said wrist;

(d) when said computed wrist axis speed is smaller than the reference speed, both interpolation of linear motion of said tool end and of rotational motion of said wrist are effected by repetitions of the same number as said reference number;

(e) but when said computed wrist axis speed exceeds the reference speed, both interpolation of linear motion of said tool end and of rotational motion of said wrist are effected by repetitions of a different number from said reference number to maintain the rotating speed of said drive electric motor equal to or less than the reference speed.

2. A control device for controlling an articulated robot of teaching playback type according to linear interpolation between two successive taught points, said device comprising:

(a) a main central processing unit (409) which, upon reception of a command request signal from an arithmetic unit, delivers teach data (including at least coordinate data for the start and end points of the linear interpolation and tangential speed data) and a macrocommand signal that constitutes an interpolation start signal, successively, to said arithmetic unit;

(b) said arithmetic unit (400) which, in accordance with microprograms stored therein, determines the number of segments obtained by dividing the distance between the starting point and the end point into a plurality of segments, and thereby produces in every reference clock a number of increment pulses for each articulation axis based on the amount of a segment corresponding to the number of the segments;

(c) a two-stage buffer pulse distributing unit (410) which includes a plurality of circuits respectively provided for the actuators of the articulation axes, each circuit comprising two series-connected buffers (411a—411e and 412a—412e) and a binary rated multiplier (413a—413e) which produces said number of increment pulses in every reference clock so that the increment pulses are distributed evenly with respect to time; and

(d) position servo mechanism which receive the increment pulses delivered from said pulse distributing unit (410) and operate the actuators for controlling the rotational movements of the articulation axes, characterized in that said number of segments is determined in a manner such that:

(1) in case where the rotating speed of any one of the wrist axes corresponding to the motion of the wrist to be interpolated is smaller than the maximum rotating speed of a drive electric motor of the wrist axis, the number of the segments is determined from the reference clock, tangential speed and the distance between the two points, but

(2) in case where the rotating speed of any one of the wrist axes corresponding to the motion of the wrist to be interpolated exceeds the maximum rotating speed of the drive electric motor, the number of the segments is determined so that the wrist axis speed is reduced to a value equal to or less than the maximum rotating speed of the drive electric motor.

**Patentansprüche**

1. Verfahren zum Steuern der Bewegung eines Handgelenks eines gelenkigen Roboters zwischen zwei gelehrten Punkten, die während eines Lehrbetriebs gespeichert wurden, wobei das Ende eines an dem erwähnten Handgelenk angebrachten Werkzeugs durch lineare Interpolation zwischen den beiden erwähnten Punkten während des Abspielbetriebs gesteuert wird, das erwähnte Handgelenk mehrere Antriebsachsen aufweist und der Abstand zwischen den beiden erwähnten Punkten in Segmente unterteilt ist, denen entsprechend jeweils die Interpolationsinkremente des Drehwinkels jeder Gelenkantriebsachse bestimmt werden, gekennzeichnet durch die folgenden Schritte:

(a) Einstellen einer Bezugsgeschwindigkeit, die der maximalen Drehgeschwindigkeit eines elektrischen Antriebsmotors jeder Handgelenkachse entspricht;

(b) Einstellen einer Bezugsanzahl der erwähnten Segmente, die in Übereinstimmung mit einer Periode eines Bezugstaktpulses berechnet werden, wobei eine Tangentialgeschwindigkeit längs der Bahn mit den beiden erwähnten Punkten und dem Abstand zwischen den beiden erwähnten Punkten in Zusammenhang steht;

(c) Vergleichen der Bezugsgeschwindigkeit mit einer errechneten Handgelenkachsengeschwindigkeit, die durch die erwähnte Bezugsanzahl, die erwähnte Periode und den Interpolationswinkel des erwähnten Handgelenks bestimmt ist;

(d) wenn die erwähnte errechnete Handgelenkachsengeschwindigkeit kleiner als die Bezugsgeschwindigkeit ist, werden sowohl die Interpolation der linearen Bewegung des erwähnten Werkzeugendes als auch die Drehbewegung des erwähnten Handgelenks durch Wiederholungen in der gleichen Anzahl wie der erwähnten Bezugsanzahl bewirkt;

(e) wenn jedoch die erwähnte errechnete Handgelenkachsengeschwindigkeit die Bezugsgeschwindigkeit überschreitet, werden sowohl die Interpolation der linearen Bewegung des erwähnten Werkzeugendes als auch die Drehbewegung des erwähnten Handgelenks durch Wiederholungen in einer von der erwähnten Bezugszahl abweichenden Anzahl bewirkt, um die Drehgeschwindigkeit des erwähnten elektrischen Antriebsmotors gleich oder kleiner als die Bezugsgeschwindigkeit zu halten.

2. Steuergerät zum Steuern eines gelenkigen Lehr-Abspielroboters entsprechend einer linearen Interpolation zwischen zwei aufeinanderfolgenden gelehrten Punkten, wobei das Steuergerät aufweist:

(a) eine Hauptzentralprozessoreinheit (409), die bei Erhalt eines Befehlsanforderungssignals von einer Recheneinheit Lehrdaten (einschließlich wenigstens Koordinatendaten für die Anfangs- und Endpunkte der linearen Interpolation und Tangentialgeschwindigkeitsdaten) sowie ein Makrobefehlssignal, das ein Interpolationsanfangssignal darstellt, nacheinander an die erwähnte Recheneinheit abgibt;

(b) wobei die Recheneinheit (400) in Abhängigkeit von darin gespeicherten Mikroprogrammen die Anzahl von Segmenten bestimmt, die durch Unterteilung des Abstands zwischen dem Anfangspunkt und dem Endpunkt in mehrere Segmente gewonnen werden, und dadurch in jedem Bezugstakt eine Anzahl von Inkrementimpulsen für jede Gelenkachse in Abhängigkeit vom Betrag eines Segments entsprechend der Anzahl der Segmente erzeugt;

(c) eine Zweistufenpuffer-Impulsverteilungseinheit (410), die mehrere Schaltungen aufweist, die jeweils für die Steller der Gelenkachsen vorgesehen sind, wobei jede Schaltung zwei in Reihe geschaltete Puffer (411a—411e und 412a—412e) und einen binär arbeitenden Multiplizierer (413a—413e) aufweist, der die erwähnte Anzahl von Inkrementimpulsen in jedem Bezugstakt erzeugt, so daß die Inkrementimpulse gleichmäßig über die Zeit verteilt sind; und

(d) Lageregeleinrichtungen, die die Inkrementimpulse aus der erwähnten Impulsverteilungseinheit (410) erhalten und die Steller so betätigen, daß sie die Drehbewegungen der Gelenkachsen steuern, dadurch gekennzeichnet, daß die erwähnte Anzahl von Segmenten in der folgenden Weise bestimmt wird:

(1) wenn die Drehgeschwindigkeit irgendeiner der Handgelenkachsen, die der zu interpolierenden Bewegung des Handgelenks entsprechen, kleiner als die maximale Drehgeschwindigkeit eines elektrischen Antriebsmotors der Handgelenkachse ist, wird die Anzahl der Segmente in Abhängigkeit von dem Bezugstakt, der Tangentialgeschwindigkeit und dem Abstand zwischen den beiden Punkten bestimmt, und

(2) wenn die Drehgeschwindigkeit irgendeiner der Handgelenkachsen, die der zu interpolierenden Geschwindigkeit des Handgelenks entsprechen, die maximale Drehgeschwindigkeit des elektrischen Antriebsmotors überschreitet, wird die Anzahl der Segmente so bestimmt, daß die Handgelenkachsengeschwindigkeit auf einen Wert verringert wird, der gleich der oder kleiner als die maximale Drehgeschwindigkeit des elektrischen Antriebsmotors ist.

**Revendications**

1. Procédé de commande du mouvement d'un poignet d'un robot articulé entre deux points de commande qui ont été mémorisés pendant un mode d'instruction, l'extrémité d'un outil fixé sur le poignet étant commandée par interpolation linéaire entre les deux points pendant le mode de reproduction, le poignet comportant une pluralité d'axes d'entraînement, la distance entre les deux points étant divisée en segments, les incréments d'interpolation de l'angle de rotation de chaque axe d'entraînement d'articulation étant déterminés en correspondance à chaque segment, le procédé étant caractérisé par les étapes suivantes:

(a) établissement d'une vitesse de référence correspondant à la vitesse maximale de rotation d'un moteur électrique d'entraînement de chaque axe du poignet;

(b) établissement d'un nombre de référence des segments qui sont calculés en concordance avec une période d'une impulsion d'horloge de référence, d'une vitesse tangentielle le long du trajet qui est relié par les deux points et de la distance entre les deux points;

**0 060 563**

(c) comparaison de la vitesse de référence avec une vitesse calculée d'axe de poignet, définie par le nombre de référence, la période et l'angle d'interpolation du poignet;

(d) quand la vitesse calculée de l'axe de poignet est plus petite que la vitesse de référence, les deux interpolations du mouvement linéaire de l'extrémité d'outil et du mouvement de rotation du poignet sont effectuées par des répétitions du même nombre que le nombre de référence;

(e) cependant, lorsque la vitesse calculée de l'axe de poignet dépasse la vitesse de référence, les deux interpolations du mouvement linéaire de l'extrémité d'outil et du mouvement de rotation du poignet sont effectuées par des répétitions d'un nombre différent du nombre de référence afin de maintenir la vitesse de rotation du moteur électrique d'entraînement égale ou inférieure à la vitesse de référence.

2. Dispositif de commande pour commander un robot articulé du type à reproduction d'instruction en concordance avec une interpolation linéaire entre deux points de commande successifs, ledit dispositif comprenant:

(a) une unité centrale principale de traitement (409) qui, lors de la réception d'un signal de demande de commande provenant d'une unité arithmétique, fournit des données d'instruction (notamment au moins des données de coordonnées concernant les points de départ et de terminaison de l'interpolation linéaire et des données de vitesse tangentielle) et un signal de macro-commande qui constitue un signal de début d'interpolation, successivement, à ladite unité arithmétique;

(b) ladite unité arithmétique (400) qui, en concordance avec des micro-programmes mémorisés dans celle-ci, détermine le nombre de segments obtenus par division de la distance entre le point de départ et le point de terminaison en une pluralité de segments, et qui produit en conséquence dans chaque horloge de référence un nombre d'impulsions incrémentales pour chaque axe d'articulation sur la base de la grandeur d'un segment correspondant au nombre des segments;

(c) une unité de distribution d'impulsions à tampons à deux étages (410) qui comprend une pluralité de circuits prévus respectivement pour les organes d'actionnement des axes d'articulation, chaque circuit comprenant deux tampons reliés en série (411a—411e et 412a—412e) et un multiplicateur à commande binaire (413a—413e) qui produit ledit nombre d'impulsions incrémentales dans chaque horloge de référence de telle sorte que les impulsions incrémentales soient distribuées uniformément dans le temps; et

(d) un servo-mécanisme de positionnement qui reçoit les impulsions incrémentales fournies par ladite unité de distribution d'impulsions (410) et qui actionne les organes d'actionnement en vue de la commande des mouvements de rotation des axes d'articulation, caractérisé en ce que ledit nombre de segments est déterminé d'une manière telle que:

(1) dans un cas où la vitesse de rotation de l'un quelconque des axes de poignet correspondant au mouvement du poignet à interpoler est plus petite que la vitesse maximale de rotation d'un moteur électrique d'entraînement de l'axe de poignet, le nombre des segments est déterminé à partir de l'horloge de référence, de la vitesse tangentielle et de la distance entre les deux points, mais

(2) dans un cas où la vitesse de rotation de l'un quelconque des axes de poignet correspondant au mouvement du poignet à interpoler dépasse la vitesse maximale de rotation du moteur électrique d'entraînement, le nombre des segments est déterminé de telle sorte que la vitesse de l'axe du poignet soit réduite à une valeur égale ou inférieure à la vitesse maximale de rotation du moteur électrique d'entraînement.

11

# F I G. I

# F I G. 2

A

B

P (CONTROL POINT)

# F I G. 3

z

$V_0$

$P_2$

$T_0$

SPEED

TIME

$P_1$

$T_0$

O

y

x

2

F I G. 4